Europäisches Patentamt

**European Patent Office**

Office européen des brevets

(11) Veröffentlichungsnummer : **0 123 134**
**B1**

(12) **EUROPÄISCHE PATENTSCHRIFT**

(45) Veröffentlichungstag der Patentschrift :
11.01.89

(51) Int. Cl.⁴ : **G 02 B   6/38**

(21) Anmeldenummer : 84103062.0

(22) Anmeldetag : 20.03.84

(54) Steckerteil für lösbare Steckverbindungen von Lichtwellenleitern, Verfahren zu dessen Herstellung und Vorrichtung zur Ausführung des Verfahrens.

(30) Priorität : 25.03.83 DE 3310973

(43) Veröffentlichungstag der Anmeldung :
31.10.84 Patentblatt 84/44

(45) Bekanntmachung des Hinweises auf die Patenterteilung : 11.01.89 Patentblatt 89/02

(84) Benannte Vertragsstaaten :
AT BE CH DE FR GB IT LI LU NL SE

(56) Entgegenhaltungen :
DE--A-- 2 704 140
DE--A-- 2 711 670
DE--A-- 2 742 357
US--A-- 3 999 841

(73) Patentinhaber : **Siemens Aktiengesellschaft Berlin und München**
**Wittelsbacherplatz 2**
**D-8000 München 2 (DE)**

(72) Erfinder : **Krause, Dieter**
**Ravensburger Ring 65**
**D-8000 München 60 (DE)**
Erfinder : **Sedlmaier, Josef**
**Sommerstrasse 19**
**D-8000 München 90 (DE)**
Erfinder : **Odemar, Norbert, Ing.-grad.**
**Hofbrunnstrasse 9**
**D-8000 München 71 (DE)**

EP 0 123 134 B1

Jouve, 18, rue St-Denis, 75001 Paris, France

## Beschreibung

Die Erfindung bezieht sich auf ein Verfahren zur Herstellung, sowie auf eine Vorrichtung zur Ausführung des Verfahrens, eines Steckerteiles für lötbare Steckverbindungen von Lichtwellenleitern.

Damit bei lösbaren Steckverbindungen von Lichtwellenleitern mit beliebigen Steckerpaarungen eine geringe Kopplungsdämpfung erreicht werden kann, muß einerseits der Konzentrizitätsfehler zwischen der Aufnahmeöffnung für den Lichtwellenleiter und dem äußeren Umfang des entsprechenden Steckzylinders geringer als 5 μm sein, während andererseits die Durchmessertoleranzen der Aufnahmeöffnungen und der Außendurchmesser der Steckzylinder weniger als 2 μm betragen müssen.

Aus der deutschen Patentschrift DE-A-27 42 357 ist eine Steckvorrichtung bekannt, die derartigen Ansprüchen genügt. Diese Steckvorrichtung besteht aus einer Kapillare zur Aufnahme eines Lichtwellenleiters, einem Steckzylinder in welchem die Kapillare angeordnet ist und einem aushärtbaren Bindemittel zwischen dem äußeren Umfang der Kapillare und dem inneren Umfang des Steckzylinders. Die hierbei vorgenommene Justierung der Kapillare innerhalb des Steckzylinders wird durch Manipulation des in der Kapillare bereits befindlichen Lichtwellenleiters, der dabei in einiger Entfernung zu dem Ort gefasst wird, an dem die Zentrierung stattfinden soll, durchgeführt. Dies bedeutet einen erheblichen Arbeits- und Justieraufwand.

Der Erfindung liegt die Aufgabe zugrunde, die koaxiale Ausrichtung von Kapillare und Steckzylinder direkt an dem Ort durchzuführen, an dem die Zentrierung benötigt wird, d. h. dort, wo später mindestens zwei Lichtwellenleiter stirnseitig zusammenstoßen.

Diese Aufgabe wird durch die Verfahrensschritte des Anspruches 1 gelöst.

Der Erfindung liegt die Erkenntnis zugrunde, daß die geforderte Koaxialität zwischen der Aufnahmeöffnung der Kapillare und dem äußeren Umfang des Steckzylinders durch direkte Justierung der Kapillare innerhalb des Steckzylinders erreicht werden kann. Während der Verfahrensschritte a) bis d) befindet sich noch kein Lichtwellenleiter in der Kapillare. Nach der Zentrierung der Kapillare innerhalb des Steckzylinders und nach dem Aushärten eines Bindemittels im Ringspalt zwischen Steckzylinder und Kapillare ist dieser Teil der Steckvorrichtung derart justiert, daß die geforderten Toleranzen gewährleistet sind.

Eine vorteilhafte Ausgestaltung des erfindungsgemäßen Verfahrens besteht darin, daß das aushärtbare Bindemittel nach der koaxialen Ausrichtung der Kapillare in den Ringspalt eingebracht wird. Dadurch können der Justiervorgang und der für die Fixierung der Kapillare im Steckzylinder erforderliche Klebevorgang zeitlich und räumlich getrennt durchgeführt werden.

Eine Vorrichtung zur Ausführung des erfindungsgemäßen Verfahrens wird im Anspruch 3 definiert. Bei einer derart ausgebildeten Vorrichtung kann der Steckzylinder mitsamt der lose darin aufgenommenen Kapillare zwischen den Zentrierspitzen in das Führungsprisma eingelegt werden. Durch die Verschiebung eines Zentrierspitzenträgers oder beider Zentrierspitzenträger wird dann die Kapillare zwischen den Zentrierspitzen aufgenommen, wobei die Aufnahmeöffnung der Kapillare gleichzeitig in Bezug auf den äußeren Umfang des Steckzylinders koaxial ausgerichtet wird. Diese praktisch selbsttätige koaxiale Ausrichtung wird dadurch ermöglicht, daß die beiden Zentrierspitzenträger und der Steckzylinder den gleichen Außendurchmesser aufweisen.

Bei einer bevorzugten Ausgestaltung der vorstehend beschriebenen Vorrichtung ist einem der im Führungsprisma angeordneten Zentrierspitzenträger eine in Längsrichtung des Führungsprismas verschiebbare Vorzentrierung zugeordnet, wobei die Vorzentrierung einen von der Zentrierspitze des Zentrierspitzenträgers durchsetzbaren und der Stirnseite der Kapillare zugeordneten Zentrierkonus besitzt. Die Kapillare kann dann zunächst auf einer Seite in einer Zentrierspitze und auf der anderen Seite in dem Zentrierkonus der Vorzentrierung aufgenommen werden. Nach einer derartigen Vorzentrierung kann dann die zweite Zentrierspitze ungehindert durch den Zentrierkonus hindurch in die Aufnahmeöffnung der Kapillare eindringen. Die Verwendung der Vorzentrierung ist insbesondere dann vorteilhaft, wenn die Aufnahmeöffnung der Kapillare einen Durchmesser aufweist, der gleich oder kleiner ist als der Unterschied zwischen dem Außendurchmesser und dem Innendurchmesser des Ringspaltes.

Bei einer weiteren Ausgestaltung der Vorrichtung sind der Steckzylinder und mindestens einer der Zentrierspitzenträger durch lösbare Spanneinrichtungen im Führungsprisma verspannbar. Nach der koaxialen Ausrichtung der Kapillare kann dann die Verspannung von Steckzylinder und Zentrierspitzenträger bis zur Aushärtung des in den Ringspalt eingebrachten Bindemittels aufrechterhalten werden.

Eine automatische Betätigung der Vorrichtung kann dadurch ermöglicht werden, daß mindestens ein Zentrierspitzenträger über eine Steuereinrichtung im Führungsprisma axial verschiebbar ist. Dabei ist es zweckmäßig, wenn auch die Vorzentrierung über die Steuereinrichtung in Längsrichtung des Führungsprismas verschiebbar ist.

Bei einer weiteren vorteilhaften Ausgestaltung ist vorgesehen, daß das Führungsprisma und die beiden Zentrierspitzenträger in einer aus der Vorrichtung entnehmbaren Justieraufnahme angeordnet sind. Die Justieraufnahme kann dann nach dem Justiervorgang aus der Vorrichtung entnommen werden, so daß der für die Fixierung der Kapillare im Steckzylinder erforderliche Klebevorgang zeitlich und räumlich getrennt durchgeführt werden kann. Bei Verwendung einer Vorzentrierung wird die Entnahme der Justieraufnahme dadurch ermöglicht, daß der Zentrierkonus der Vorrichtung in Längsrichtung geschlitzt ist. Durch diesen Schlitz kann dann der Zentrierkonus von der zugeordneten Zentrierspitze abgehoben werden.

Anhand der Zeichnung werden Ausführungsbeispiele der Erfindung näher erläutert.

Es zeigen :

Figur 1 ein Steckerteil für lösbare Steckverbindungen von lichtwellenleitern,

Figur 2 eine Vorrichtung zur Herstellung des in Figur 1 dargestellten Steckerteiles,

Figur 3 eine vergrößerte Darstellung der Vorzentrierung der in Figur 2 dargestellten Vorrichtung,

Figuren 4 und 5 zwei verschiedene Ansichten einer Klebevorrichtung.

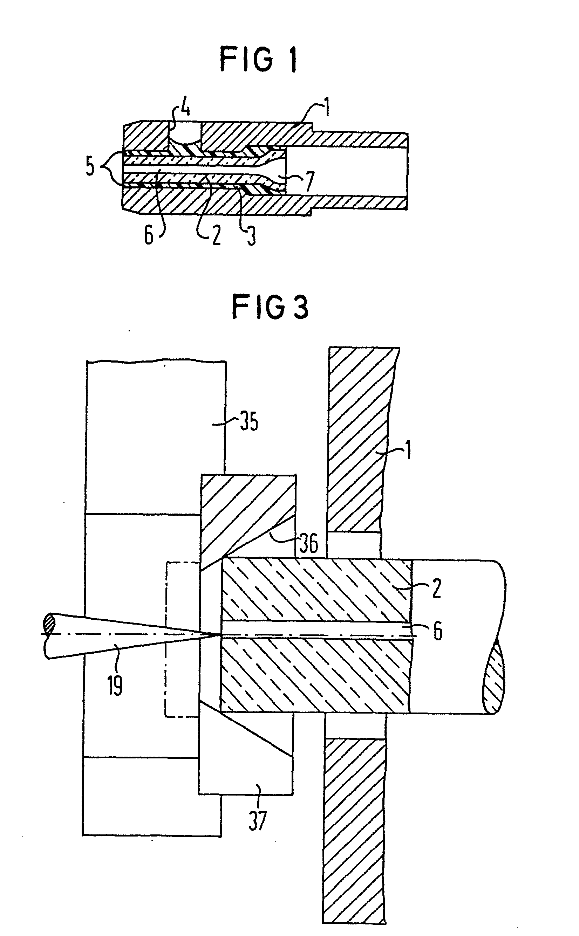

In Figur 1 ist ein Längsschnitt durch ein Steckerteil für lösbare Steckverbindungen von Lichtwellenleitern dargestellt. Dieser Steckerteil besteht aus einem Steckzylinder 1, in welchem eine Kapillare 2 angeordnet ist, wobei die Verbindung zwischen Steckzylinder 1 und Kapillare 2 durch ein aushärtbares Bindemittel 3 hergestellt ist. Dieses aushärtbare Bindemittel 3 wird durch eine radiale Öffnung 4 im Mantel des Steckzylinders 1 zugeführt, so daß es durch Kapillarwirkung in den zwischen dem äußeren Umfang der Kapillare 2 und dem inneren Umfang des Steckzylinders 1 gebildeten Ringspalt 5 gezogen wird. Die Kapillare 2 weist eine hochgenaue Aufnahmeöffnung 6 auf, welche an ihrem hinteren Ende eine trichterförmige Erweiterung 7 besitzt.

Bei der Herstellung eines in Figur 1 dargestellten Steckerteiles werden Steckzylinder 1 und Kapillaren 2 getrennt gefertigt und anschließend sortiert, um günstige Paarungen erzielen zu können. Die Kapillare 2 einer derart ermittelten Paarung wird dann in den zugeordneten Steckzylinder 1 eingebracht und dort in einer später noch zu beschreibenden Weise derart justiert, daß die Aufnahmeöffnung 6 der Kapillare 2 in bezug auf den äußeren Umfang des Steckzylinders 1 koaxial ausgerichtet ist. Nach dieser Justierung wird über die Öffnung 4 das aushärtbare Bindemittel 3 in viskoser Form in den Ringspalt 5 eingebracht, so daß sich nach dessen Aushärtung eine dauerhafte Verbindung von Steckzylinder 1 und Kapillare 2 ergibt. Der weitere Zusammenbau wird dann erst am Einsatzort vorgenommen, wobei der im Endbereich vom Mantel befreite Lichtwellenleiter über die trichterförmige Erweiterung 7 in die Aufnahmeöffnung 6 der Kapillare 2 eingeführt und in der Aufnahmeöffnung 6 festgeklebt wird. Zur Komplettierung einer Steckverbindung stoßen dann zwei gemäß Figur 1 ausgebildete Steckerteile stirnseitig aneinander, wobei die beiden Steckzylinder 1 beispielsweise in einer gemeinsamen Zentriermuffe oder dgl. aufgenommen sind.

Der Steckzylinder 1 besteht aus einem verschleißfesten Material, z. B. aus Hartmetall, während als Kapillare 2 beispielsweise eine gezogene Glaskapillare verwendet werden kann. Als aushärtbares Bindemittel 3 können geeignete aushärtende Klebstoffe, wie z. B. Zweikomponenten-Klebstoffe, verwendet werden.

Um einen Eindruck über die Größenordnung eines in Figur 1 dargestellten Steckerteiles zu vermitteln, werden nachfolgend einige typische Abmessungen von zwei Ausführungsbeispielen angegeben :

Außendurchmessers des Steckzylinders 1 : 4,5 oder 2,5 mm
Innendurchmesser des Steckzylinders 1 : 1,8 oder 1,3 mm
Außendurchmesser der Kapillare 2 : 1,4 oder 0,9 mm
Durchmesser der Aufnahmeöffnung 6 : 0,13 mm
Durchmesser des Lichtwellenleiters : 0,125 mm

Bei derartig bemessenen Steckerteilen war der Konzentrizitätsfehler zwischen der Aufnahmeöffnung 6 und dem äußeren Umfang des Steckzylinders 1 stets geringer als 5 μm, während bei beliebigen Steckerpaarungen eine Kopplungsdämpfung der Steckverbindung erreicht werden konnte, die stets weniger als 1 dB betrug.

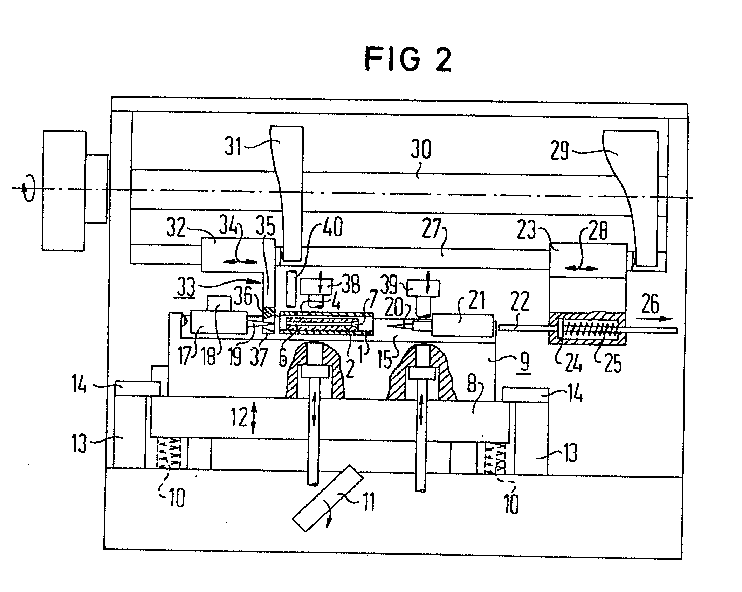

Figur 2 zeigt eine Vorrichtung zur Herstellung des in Figur 1 dargestellten Steckerteiles. Diese Vorrichtung besitzt einen Hubtisch 8, auf welchem eine insgesamt mit 9 bezeichnete Justieraufnahme befestigt ist. Der unter der Wirkung von Federn 10 stehende Hubtisch 8 kann durch die Betätigung eines Hebels 11 angehoben bzw. abgesenkt werden, wobei diese Hubbewegungen durch einen Doppelpfeil 12 angedeutet sind. Die obere Position des Hubtisches 8, welche der Justierposition der Justieraufnahme 9 entspricht, wird dabei durch an vertikalen Säulen 13 angebrachte Anschläge 14 definiert.

Die Justieraufnahme 9 besitzt ein Führungsprisma 15, welches in der in Figur 1 dargestellten Lage an seinem linken Ende durch einen Anschlag 16 begrenzt ist. In dem Führungsprisma 15 ist ein erster zylindrischer Zentrierspitzenträger 17 aufgenommen, welcher mit einer Stirnseite an dem Anschlag 16 anliegt und in dieser Lage durch eine Spannbacke 18 festgehalten wird. An der anderen Stirnseite des ersten Zentrierspitzenträgers 17 ist eine koaxial zu dessen Achse ausgerichtete erste Zentrierspitze 19 angebracht, welcher in einigem Abstand eine zweite Zentrierspitze 20 gegenüberliegt. Diese zweite Zentrierspitze 20 ist an einem zweiten zylindrischen Zentrierspitzenträger 21 angebracht und koaxial zu dessen Achse ausgerichtet. Der ebenfalls in dem Führungsprisma 15 aufgenommene zweite Zentrierspitzenträger 21 ist im Gegensatz zu dem fest angeordneten ersten Zentrierspitzenträger 17 in Längsrichtung des Führungsprismas 15 verschiebbar, wobei diese Verschiebung über einen abgefederten Druckstift 22 vorgenommen werden kann. Der Druckstift 22 ist dabei in einem Schlitten 23 derart geführt, daß er gegen die Kraft einer an einem Teller 24 des Druckstiftes 22 anliegenden Feder 25 in Richtung des Pfeiles 26 nachgeben kann. Der den Druckstift 22 tragende Schlitten 23 ist seinerseits auf einer Führungsstange 27 angeordnet, auf welcher er mit Hilfe einer Kugelführung in den Richtungen des Doppelpfeiles 28 bewegt werden kann. Die Bewegung des Schlittens 23 wird dabei über eine Steuerwalze 29 gesteuert, die auf einer Steuerwelle 30 befestigt ist. Auf dieser Steuerwelle 30 ist auch eine zweite Steuerwalze 31 angeordnet, über welche der Schlitten 32 einer Vorzentrierung 33 bewegt werden kann. Der Schlitten 32 ist auf der Führungsstange 27 angeordnet, auf welcher er mit Hilfe einer Kugelführung in den Richtungen des Doppelpfeiles 34 verschoben werden kann. Die Vorzentrierung 33 besitzt einen nach unten ragenden Arm 35, welcher an seinem unteren Ende mit einem sich in der in Figur 2 dargestellten Lage nach rechts öffnenden Zentrierkonus 36 versehen ist. Der Zentrierkonus 36 ist dabei so ausgerichtet, daß er in der Justierposition der Justieraufnahme 9 von der ersten Zentrierspitze 19 koaxial durchsetzt werden kann. In seinem unteren Bereich besitzt der Zentrierkonus 36 einen in Längsrichtung verlaufenden Schlitz 37, durch welchen die erste Zentrierspitze 19 beim Absenken des Hubtisches 8 hindurchtreten kann.

Die Justieraufnahme 9 ist ferner mit zwei lösbaren Spanneinrichtungen 38 und 39 ausgerüstet, wobei mit Hilfe der Spanneinrichtung 38 der Steckzylinder 1 im Führungsprisma 15 verspannt werden kann und wobei mit Hilfe der Spanneinrichtung 39 der zweite Zentrierspitzenträger 21 im Führungsprisma 15 verspannt werden kann.

Die in Figur 2 dargestellte Vorrichtung arbeitet wie folgt:

Auf dem Hubtisch 8 wird eine Justieraufnahme 9 eingespannt und durch Betätigung des Hebels 11 in ihre Justierposition angehoben. Danach wird durch Drehen der zentralen Steuerwelle 30 die Vorzentrierung 33 in ihre Bestückungsposition gefahren und es werden gleichzeitig die Spanneinrichtungen 38 und 39 der Justieraufnahme 9 geöffnet. Nun wird der Steckzylinder 1 mit der lose darin aufgenommenen Kapillare 2 in das Führungsprisma 15 eingelegt, und zwar in dem zwischen den Zentrierspitzen 19 und 20 liegenden Bereich.

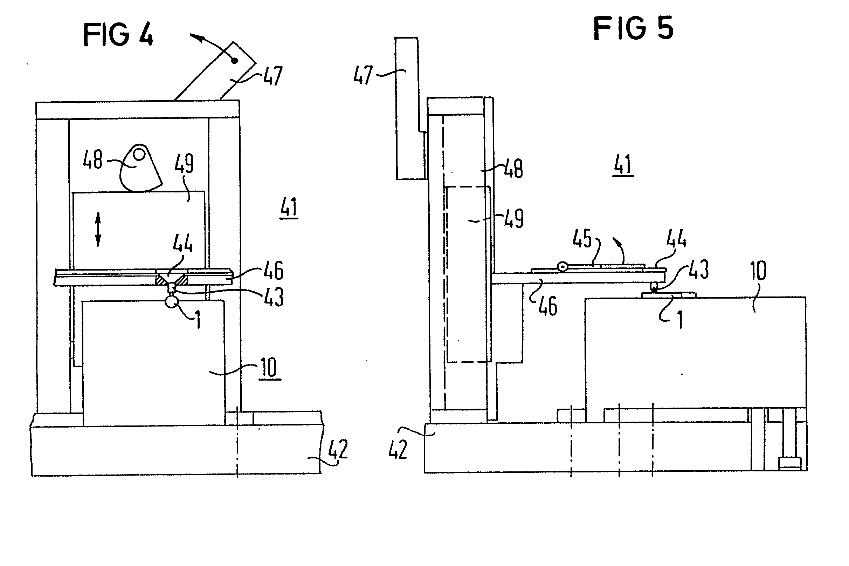

Nach diesem Bestückungsvorgang wird beim Weiterdrehen der Steuerwelle 30 der Schlitten 23 so verfahren, daß der gefederte Druckstift 22 den zweiten Zentrierspitzenträger 21 auf die Kapillare 2 zu bewegt. Die zweite Zentrierspitze 20 tritt bei dieser Bewegung in die trichterförmige Erweiterung 7 der Aufnahmeöffnung 8 ein und schiebt dann die Kapillare 2 in den Zentrierkonus 36 der Vorzentrierung 33. Aus der vergrößerten Darstellung der Figur 3 ist deutlich ersichtlich, daß nach diesem Vorzentrierungsvorgang die Kapillare 2 mit ihrer Aufnahmeöffnung 6 von der ersten Zentrierspitze 19 aufgenommen werden kann, wobei die später eingenommene Lage der Kapillare 2 durch eine nicht näher bezeichnete strichpunktierte Linie angedeutet ist. Die zwischen dem Druckstift 22 und dem Zentrierkonus 36 eingespannte Kapillare 2 wird dementsprechend nun mit ihrer Aufnahmeöffnung 6 auf die erste Zentrierspitze 19 aufgefädelt. Durch weiteres Drehen der Steuerwelle 30 fährt dann nur die Vorzentrierung 33 in ihre Anschlagstellung, wodurch die Kapillare 2 auf die erste Zentrierspitze 19 abgelegt wird und dementsprechend nur noch auf den beiden Zentrierspitzen 19 und 20 liegt. Anschließend wird den Druckstift 22 noch ein Stück weiterbewegt, wodurch die Kapillare 2 zwischen den beiden Zentrierspitzen 19 und 20 genau justiert wird. Nun wird der Steckzylinder 1 z. B. von Hand gegen den Arm 35 Vorzentrierung 33 geschoben und die Öffnung 4 mit Hilfe eines in Figur 2 nur angedeuteten Bolzens 40 justiert. Durch Weiterdrehen der Steuerwelle 30 fährt die Vorzentrierung 33 in ihre linke Ausgangsstellung zurück. Gleichzeitig werden die Spanneinrichtungen 38 und 39 betätigt, wodurch der Steckzylinder 1 und der zweite Zentrierspitzenträger 21 in das Führungsprisma gedrückt werden. Damit ist dann der Justier- und Spannvorgang abgeschlossen. In der dabei eingenommenen Lage ist die Aufnahmeöffnung 6 der Kapillare 2 in bezug auf den äußeren Umfang des Steckzylinders 1 koaxial ausgerichtet. Diese mit geringem Aufwand erreichte koaxiale Ausrichtung ist darauf zurückzuführen, daß die beiden Zentrierspitzenträger 17 und 21 gleichen Außendurchmesser wie der Steckzylinder 1 aufweisen und die beiden koaxial ausgerichteten Zentrierspitzen 19 und 20 somit auch die Aufnahmeöffnung 6 der Kapillare 2 koaxial in bezug auf den äußeren Umfang des Steckzylinders 1 ausrichten.

Nach Beendigung des vorstehend beschriebenen Justier- und Spannvorganges wird der Hubtisch 8 abgesenkt und die bestückte Justieraufnahme 9 aus der Vorrichtung entnommen. Anschließend wird die Justieraufnahme 9 in einer in den Figuren 4 und 5 dargestellten Klebeeinrichtung 41 abgestellt. Die Justieraufnahme 9 wird dabei auf einem Tisch 42 der Klebeeinrichtung 41 derart positioniert, daß das Ausgußrohr 43 eines Klebetrichters 44 genau über der Öffnung 4 des Steckzylinders 1 zu liegen kommt. Der Klebetrichter 44 wird dabei von einer schwenkbaren Platte 45 gehalten, welche ihrerseits an einem Ausleger 46 der Klebeeinrichtung 41 angebracht ist. Anschließend wird durch die Betätigung eines Hebels 47 und über eine Steuernocke 48 ein den Ausleger 46 tragender Schlitten 49 so weit abgesenkt, bis das Ausgußrohr 43 des Klebetrichters 44 in die Öffnung 4 des Steckzylinders 1 eindringt. Als aushärtbares Bindemittel 3 (vgl. Figur 1) wird dann beispielsweise ein geeigneter Zweikomponenten-Kleber angerührt und in den Klebetrichter 44 eingefüllt, so daß er in den Ringspalt 5 (vgl. Figur 1) eindringen kann. Da die Kleberaushärtung ca. 90 Minuten beansprucht, ist es zweckmäßig mehrere Justieraufnahmen 9 zu bestücken und die anschließende Klebung gleichzeitig durchzuführen.

Der für die Herstellung der in Figur 1 dargestellten Steckerteile erforderliche Arbeitsablauf könnte auch vollständig automatisiert werden, so daß eine wirtschaftliche Fertigung mit hohen Stückzahlen erreichbar ist. Das anhand der Figuren 2 und 3 beschriebene Justierprinzip ist auch für andere geometrische Teileformen von Steckerteilen zu realisieren, da die Form der Zentrierspitzen und des Führungsprismas den entsprechenden Teilen gut angepaßt werden kann.

4

**Patentansprüche**

1. Verfahren zur Herstellung eines Steckerteils für lösbare Steckverbindungen von Lichtwellenleitern mit folgenden Verfahrensschritten :

a) loses Einbringen einer Kapillare (2) in einen Steckzylinder (1),

b) Aufnehmen der Kapillare (2) zwischen zwei Zentrierspitzen (19, 20),

c) koaxiales Ausrichten einer Aufnahmeöffnung (6) der Kapillare (2) mit Hilfe der Zentrierspitzen (19, 20) in Bezug auf den äußeren Umfang des Steckzylinders (1) und

d) anschließende Fixierung der Kapillare (2) durch Aushärten eines in einen Ringspalt (5) eingebrachten aushärtbaren Bindemittels (3).

2. Verfahren nach Anspruch 1, dadurch gekennzeichnet, daß das aushärtbare Bindemittel (3) nach der koaxialen Ausrichtung der Kapillare (2) in den Ringspalt (5) eingebracht wird.

3. Vorrichtung zur Ausführung des Verfahrens nach Anspruch 1 oder Anspruch 2, gekennzeichnet durch folgende Merkmale :

e) in einem Führungsprisma (15) sind zwei zylindrische Zentrierspitzenträger (17, 21) eingelegt,

f) die beiden Zentrierspitzenträger (17, 21) weisen den gleichen Außendurchmesser wie der Steckzylinder (1) auf,

g) an jedem Zentrierspitzenträger (17, 21) ist eine koaxial ausgerichtete Zentrierspitze (19, 20) angebracht,

h) mindestens einer der Zentrierspitzenträger (17, 21) ist in Längsrichtung des Führungsprismas (15) verschiebbar.

4. Vorrichtung nach Anspruch 3, dadurch gekennzeichnet, daß einem der im Führungsprisma (15) angeordneten Zentrierspitzenträger (17) eine in Längsrichtung des Führungsprismas (15) verschiebbare Vorzentrierung (33) zugeordnet ist und daß die Vorzentrierung (33) einen von der Zentrierspitze (19) des Zentrierspitzenträgers (17) durchsetzbaren und der Stirnseite der Kapillare (2) zugeordneten Zentrierkonus (36) besitzt.

5. Vorrichtung nach Anspruch 3 oder Anspruch 4, dadurch gekennzeichnet, daß der Steckzylinder (1) und mindestens einer der Zentrierspitzenträger (21) durch lösbare Spanneinrichtungen (38, 39) im Führungsprisma (15) verspannbar sind.

6. Vorrichtung nach einem der Ansprüche 3 bis 5, dadurch gekennzeichnet, daß mindestens ein Zentrierspitzenträger (21) über eine Steuereinrichtung (29, 30, 31) im Führungsprisma (15) axial verschiebbar ist.

7. Vorrichtung nach den Ansprüchen 4 und 6, dadurch gekennzeichnet, daß auch die Vorzentrierung (33) über die Steuereinrichtung (29, 30, 31) in Längsrichtung des Führungsprismas (15) verschiebbar ist.

8. Vorrichtung nach Anspruch 6 oder 7, dadurch gekennzeichnet, daß das Führungsprisma (15) und die beiden Zentrierspitzenträger (17, 21) in einer aus der Vorrichtung entnehmbaren Justieraufnahme (9) angeordnet sind.

9. Vorrichtung nach Anspruch 7, dadurch gekennzeichnet, daß der Zentrierkonus (36) der Vorzentrierung (33) in Längsrichtung geschlitzt ist.

**Claims**

1. Method of manufacturing a connector for detachable plug-and-socket connections of optical waveguides, having the following process steps :

a) loose insertion of a capillary (2) in a connector cylinder (1),

b) acceptance of the capillary (2) between two centering points (19, 20),

c) coaxial alignment of an accepting opening (6) of the capillary (2) with the aid of the centering points (19, 20) in relation to the outer periphery of the connector cylinder (1) and

d) subsequent fixing of the capillary (2) by hardening of a hardenable adhesive (3) inserted in an annular gap (5).

2. Method according to Claim 1, characterized in that the hardenable adhesive (3) is inserted into the annular gap (5) after the coaxial alignment of the capillary (2).

3. Device for carrying out the method according to Claim 1 or Claim 2, characterized by the following features :

e) two cylindrical centering point holders (17, 21) are inserted in a prismatic slide (15),

f) the two centering point holders (17, 21) have the same external diameter as the connector cylinder (1),

g) a coaxially aligned centering point (19, 20) is mounted on each centering point holder (17, 21),

h) at least one of the centering point holders (17, 21) is displaceable in longitudinal direction of the prismatic slide (15).

4. Device according to Claim 3, characterized in that a precentering attachment (33) displaceable in the longitudinal direction of the prismatic slide (15) is assigned to a centering point holder (17) arranged in the prismatic slide (15), and in that the precentering attachment (33) has a centering cone (36) penetrable by the centering point (19) of the centering point holder (17) and assigned to the face of the capillary (2).

5. Device according to Claim 3 or Claim 4, characterized in that the connector cylinder (1) and at least one of the centering point holders (21) may be clamped by detachable clamping mechanisms (38, 39) in the prismatic slide (15).

6. Device according to one of Claims 3 to 5, characterized in that at least one centering point holder (21) may be displaced axially in the prismatic slide (15) by a control device (29, 30, 31).

7. Device according to Claims 4 and 6, characterized in that the precentering attachment (33) may also be displaced in the longitudinal direction of the prismatic slide (15) by the control element (29, 30, 31).

8. Device according to Claim 6 or 7, characterized in that the prismatic slide (15) and the two centering point holders (17, 21) are arranged in an adjuster receptacle (9) capable of being removed from the device.

9. Device according to claim 7, characterized in that the centering cone (36) of the precentering attachment (33) is slotted in the longitudinal direction.


**Revendications**

1. Procédé pour la fabrication d'un élément à enfichage pour des liaisons à enfichage détachables de conducteurs de guides d'ondes lumineuses, comportant les phases opératoires suivantes :
   a) introduction lache d'un capillaire (2) dans un cylindre à enfichage (1),
   b) réception du capillaire (2) entre deux pointes de centrage (19, 20),
   c) alignement coaxiale d'une ouverture de réception (6) du capillaire (2) à l'aide des pointes de centrage (19, 20), par rapport à la périphérie extérieure du cylindre à enfichage (1), et
   d) fixation du capillaire (2) par durcissement d'un liant durcissable (3) introduit dans une fente annulaire (5).

2. Procédé selon la revendication 1, caractérisé par le fait que le liant durcissable (3) est introduit dans la fente annulaire (5) après alignement du capillaire (2).

3. Dispositif pour la mise en œuvre du procédé selon la revendication 1 ou selon la revendication 2, caractérisé par les moyens particuliers suivants :
   e) dans un prisme de guidage (15) sont introduits deux supports cylindriques de pointes de centrage (17, 21),
   f) les deux supports des pointes de centrage (17, 21) possèdent le même diamètre extérieur que le cylindre à enfichage (1),
   g) sur chaque support de pointe de centrage (17, 21) est montée une pointe de centrage (19, 20) alignée coaxialement,
   h) au moins l'un des supports des pointes de centrage (17, 21) est déplaçable dans le sens longitudinal du prisme de guidage (15).

4. Dispositif selon la revendication 3, caractérisé par le fait qu'à l'un des supports des pointes de centrage (17), qui est disposé dans le prisme de guidage (15), est associé un précentreur (33) déplaçable dans le sens longitudinal du prisme de guidage (15), et que le précentreur (33) possède un cône de centrage (36) qui est susceptible d'être traversé par la pointe de centrage (19) du support de pointe de centrage (17) et associé au cône frontal du capillaire (2).

5. Dispositif selon la revendication 3 ou selon la revendication 4, caractérisé par le fait que le cylindre à enfichage (1) et au moins l'un des supports de pointe de centrage (21), est susceptible d'être bloqué dans le prisme de guidage (15), à l'aide de dispositifs de serrage (38, 39).

6. Dispositif selon l'une des revendications 3 à 5, caractérisé par le fait qu'au moins un support de pointe de centrage (21) est susceptible d'être déplacé axialement dans le prisme de guidage (15), par l'intermédiaire d'un dispositif de commande (29, 30, 31).

7. Dispositif selon les revendications 4 et 6, caractérisé par le fait qu'également le précentreur (33) est susceptible d'être déplacé dans le sens longitudinal du prisme de guidage (15), par l'intermédiaire d'un dispositif de commande (29, 30, 31).

8. Dispositif selon la revendication 6 ou 7, caractérisé par le fait que le prisme de guidage (15) et les deux supports de pointes de centrage (17, 21), sont disposés dans une languette d'ajustement (9) qui est susceptible d'être enlevée du dispositif.

9. Dispositif selon la revendication 7, caractérisé par le fait que le cône de centrage (36) du précentreur (33) est fendu dans le sens longitudinal.

# FIG 1

# FIG 3

# FIG 2

EP 0 123 134 B1

FIG 5

FIG 4